# DEMANDE DE BREVET EUROPEEN

(11) **EP 1 447 274 A2**
(43) Date de publication de la demande: **18.08.2004**
(21) Numéro de dépôt: 04364008.5
(22) Date de dépôt: 10.02.2004
(51) Int. Cl.: B60R 5/00

(54) **Tablette arrière de véhicule automobile et procédé de montage correspondant**

(30) Priorité: 13.02.2003 FR 0301769
(71) Demandeur: WAGON SAS, 79300 Bressuire (FR)
(72) Inventeur: Moreau, Stéphane, 49300 Le Puy Saint Bonnet (FR)
(74) Mandataire: Bioret, Ludovic

(57) **Abrégé**

L'invention a pour objet une tablette arrière (2) de véhicule destinée à être solidarisée à un élément de structure (3) dudit véhicule à l'aide d'au moins un élément de fixation (1), caractérisée en ce qu'elle comprend des moyens de prépositionnement et de maintien (4) dudit ou desdits éléments de fixation (1), mis en place sur ladite tablette (2) avant le montage de cette dernière sur ledit élément de structure fixe(3), de telle sorte que ladite tablette (2) et lesdits éléments de fixation (1) forment un ensemble prêt à être monté.

## Description

Le domaine de l'invention est celui des équipements de véhicules automobiles. Plus précisément, l'invention concerne les tablettes arrière de véhicules automobiles, et notamment, mais non exclusivement, les tablettes dans lesquelles une fente est ménagée pour permettre le passage de la toile d'un store d'occultation.

Le montage des tablettes arrière, des éléments de garniture (notamment les habillages latéraux de part et d'autre de la tablette arrière) et des différents équipements est une opération relativement complexe dans un véhicule, du fait du nombre important d'éléments indépendants et des différents jeux d'ajustement que l'on peut rencontrer. C'est notamment le cas pour les tablettes prévues pour être équipées d'un store d'occultation, ou d'autres éléments tels qu'un troisième feu stop.

Actuellement, la gamme de fabrication et de montage correspondante est relativement longue et peu aisée.

En effet, il est nécessaire, pour la fabrication de procéder à une succession d'étapes, et notamment :
- la fabrication d'une tablette arrière ;
- la réalisation d'une fente dans la tablette arrière (des moyens de rigidification de la fente devant généralement être prévus pour éviter que celle-ci ne se détériore dans le temps) ;
- la fabrication et l'assemblage d'un store d'occultation destiné à être fixé sous la tablette ;
- la fabrication de moyens de guidage de la toile du store destinés à être fixés à l'intérieur du véhicule.

Ces différentes pièces sont ensuite livrées au constructeur de véhicules automobiles, ce qui implique, tant pour le fabricant des pièces que pour le constructeur de véhicules, un suivi logistique approprié pour que ces pièces arrivent ensemble sur la chaîne de montage.

Parmi toutes ces pièces, les éléments de fixation (visserie, boulonnerie ou autres) représentent à eux-seuls un nombre relativement important de pièces qui doivent être :
- gérées avant, pendant et après (au moment du montage) la livraison ;
- conditionnées, numérotées, repérées, ... en vue de faciliter leur stockage puis leur montage ;
- manipulées une à une au moment de leur montage, et fixées éventuellement avec des outillages spécifiques permettant d'accélérer leur mise en place (par exemple, tournevis électrique).

Chaque pièce est donc montée sur le véhicule avec autant de gammes de montage qu'il y a de pièces (tablette, store, rails de guidage...), et donc autant de risque de défaut de montage, de temps de montage...

En outre, une fois le store et ses rails de guidage montés, il est généralement nécessaire de procéder à des réglages complémentaires, ce qui s'avère être une perte de temps pour le constructeur de véhicules automobiles.

Du fait des différents jeux, des problèmes peuvent également se poser pour le montage et l'ajustement de la tablette par rapport à la garniture du véhicule.

L'invention a notamment pour objectif de pallier ces inconvénients de l'art antérieur.

Plus précisément, l'invention a pour objectif de proposer une tablette arrière de véhicule automobile qui puisse être montée rapidement et facilement dans le véhicule.

L'invention a également pour objectif de fournir une telle tablette permettant d'obtenir des simplifications notables en termes de logistique de livraison et de montage.

En ce sens, l'invention a notamment pour objectifs de fournir une telle tablette qui :
- facilite la livraison des différentes pièces mentionnées précédemment et qui permette d'envisager une réduction des coûts de livraison ;
- optimise le stockage et le transport ;
- soit plus pratique et rapide à monter que les tablettes classiques de l'art antérieur ;
- conserve, voire améliore, les qualités de fiabilité, d'esthétisme et de résistance obtenues avec les tablettes arrières antérieures ;
- supprime, ou à tout le moins diminue les temps de réglage pour le constructeur de véhicules automobiles ;
- puisse être aisément adaptée à différents véhicules.

Un autre objectif important de l'invention est de conserver et d'optimiser ces différents aspects en présence d'un store d'occultation porté par la tablette.

Ces objectifs, ainsi que d'autres qui apparaîtront par la suite sont atteints grâce à l'invention qui a pour objet une tablette arrière de véhicule destinée à être solidarisée à un élément de structure dudit véhicule à l'aide d'au moins un élément de fixation, et comprenant des moyens de pré-positionnement et de maintien dudit ou desdits éléments de fixation, mis en place sur ladite tablette avant le montage de cette dernière sur ledit élément de structure fixe, de telle sorte que ladite tablette et lesdits éléments de fixation forment un ensemble prêt à être monté.

Ainsi, grâce à l'invention, on s'affranchit des nombreuses contraintes liées aux éléments de fixation dans leur livraison et leur montage. En effet, il n'est plus nécessaire de prévoir une gestion et un conditionnement spécifique de ces éléments de fixation, l'invention permettant de les présenter sur la tablette dans leur emplacement et leur position de montage, et de les maintenir ainsi, sous forme d'un ensemble prêt à monter.

Bien entendu, l'invention a également pour conséquence directe de faciliter le montage et de diminuer les temps correspondants à celui-ci. En effet, le monteur n'a pas à se saisir un à un des éléments de fixation, à les introduire un à un dans les perçages appropriés, pour enfin les visser. Au contraire, il a juste à présenter convenablement la tablette dans le véhicule puis à visser les éléments de fixation.

De plus, comme cela va être expliqué par la suite, une tablette selon l'invention est assemblée sur le véhicule en accédant aux éléments de fixation et en vissant ceux-ci par le dessus de la tablette.

Selon une solution préférée, lesdits moyens de pré-positionnement et de maintien forment des moyens d'entretoisement entre ladite tablette et ledit élément de structure fixe.

De cette façon, les moyens de pré-positionnement et de maintien des éléments de fixation ont une double fonction : une première fonction exercée pendant la livraison selon laquelle les éléments de fixation sont maintenus sur la tablette, et une fonction pendant et après le montage selon laquelle ces mêmes moyens exercent une fonction d'entretoisement.

On comprend donc que ces moyens de pré-positionnement et de maintien sont mis en place avant livraison, et qu'il n'est aucunement prévu de les retirer (bien entendu, une telle pièce pourrait s'avérer inutile après montage dans d'autres modes de réalisation, auquel elle pourrait être retirée du montage).

Selon une solution avantageuse, lesdits moyens de pré-positionnement et de maintien comprennent des moyens d'accrochage destinés à coopérer avec ladite tablette.

Dans ce cas, lesdits moyens d'accrochage sont avantageusement constitués par des moyens de clippage, lesdits moyens de clippage présentant préférentiellement au moins une excroissance destinée à pénétrer une cavité ménagée dans ladite tablette.

Selon une solution préférée, lesdits moyens de clippage portent au moins une portion semi-cylindrique destinée à pénétrer une gorge ménagée dans ladite tablette.

Selon un mode de réalisation particulier, lesdits moyens de pré-positionnement et de maintien présentent au moins une lumière présentant deux portions, une première portion formant orifice d'introduction desdits moyens de fixation et une seconde portion, de dimension inférieure à ladite première portion et permettant le maintien desdits moyens de fixation axialement par rapport à ladite tablette.

Dans ce cas, lesdits moyens de fixation présentent une première portion d'un diamètre correspondant sensiblement à celui dudit orifice d'introduction et au moins une deuxième portion d'un diamètre inférieur au diamètre de ladite première portion, ladite seconde portion de la lumière présentant une largeur correspondant sensiblement au diamètre de ladite deuxième portion desdits moyens de fixation. Préférentiellement, lesdits moyens de fixation comprennent au moins une pièce à visser comprenant une tête, ladite deuxième portion s'étendant à partir de ladite tête.

Selon une solution avantageuse, ladite deuxième portion s'étend sur une longueur sensiblement égale à l'épaisseur d'au moins un bord de ladite lumière ajoutée à l'épaisseur de ladite tablette au voisinage du ou des perçages ménagés pour le passage desdits moyens de fixation.

De cette façon, lorsque les éléments de fixation sont engagés dans la lumière des moyens de pré-positionnement et de maintien, on obtient un calage satisfaisant de l'ensemble obtenu.

L'invention concerne également un dispositif destiné à être couplé à une tablette arrière d'un véhicule et comprenant des moyens de pré-positionnement et de maintien d'au moins un élément de fixation de la tablette à un élément du véhicule, tels que décrits précédemment.

L'invention concerne aussi un ensemble prêt à monter, caractérisé en ce qu'il comprend :
- une tablette arrière de véhicule destinée à être solidarisée à un élément de structure fixe dudit véhicule à l'aide d'au moins un élément de fixation ;
- au moins un élément de fixation ;
- des moyens de pré-positionnement et de maintien dudit ou desdits éléments de fixation sur ladite tablette.

L'invention concerne encore un procédé de montage d'une tablette arrière d'un véhicule, comprenant les étapes de :
- mise en place sur ladite tablette, dudit ou desdits éléments de fixation à l'aide desdits moyens de pré-positionnement et de maintien dudit ou desdits éléments de fixation, de telle sorte que ladite tablette et lesdits éléments de fixation forment un ensemble prêt à être monté ;
- fixation de ladite tablette audit élément de structure fixe à l'aide dudit ou desdits éléments de fixation.

L'invention concerne encore un véhicule équipé d'une tablette arrière telle que décrite précédemment.

D'autres caractéristiques et avantages de l'invention apparaîtront plus clairement à la lecture de la description suivante, d'un mode préférentiel de l'invention donné à titre d'exemple illustratif et non limitatif, et des dessins annexés parmi lesquels :
- la figure 1 est une vue partielle en coupe d'un ensemble prêt à monter selon l'invention, en une zone dans laquelle sont réunis une tablette arrière, un élément de fixation et des moyens de pré-positionnement et de maintien de l'élément de fixation ;
- la figure 2 est une vue de face des moyens de pré-positionnement et de maintien selon l'invention ;
- les figures 3 et 4 sont deux autres vues, toutes deux en perspective, des moyens de pré-positionnement et de maintien selon l' invention ;
- la figure 5 est une illustration d'une phase de montage, à l'intérieur d'un véhicule, d'un ensemble prêt à monter selon l'invention.

Ainsi que cela est mentionné précédemment, le principe de l'invention consiste à prévoir de rapporter sur une tablette des moyens permettant de maintenir les éléments de fixation servant à solidariser la tablette au véhicule ceci dans leur position et emplacement définitif, en vue de réaliser un ensemble prêt à monter composé notamment de la tablette et de ses éléments de fixation.

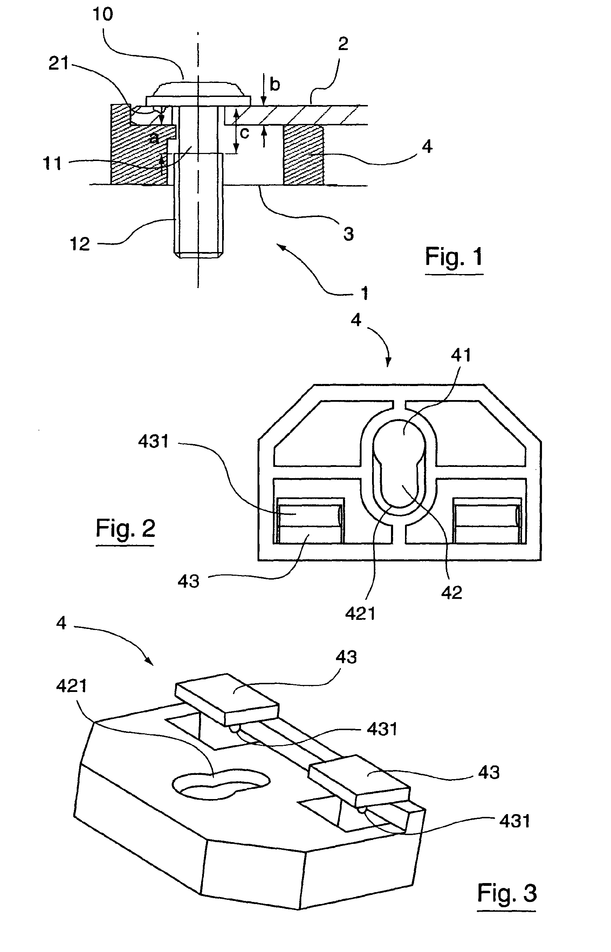

En référence à la figure 1, les éléments de fixation 1, en l'occurrence des vis, traversent la tablette arrière 2 du véhicule pour solidariser celle-ci à un élément de structure fixe 3 du véhicule, par exemple une surface en tôle.

Selon l'invention, on prévoit de rapporter sur la tablette des moyens de pré-positionnement et de maintien des vis 1, mis en place sur la tablette 2 avant son montage sur l'élément de structure fixe 3.

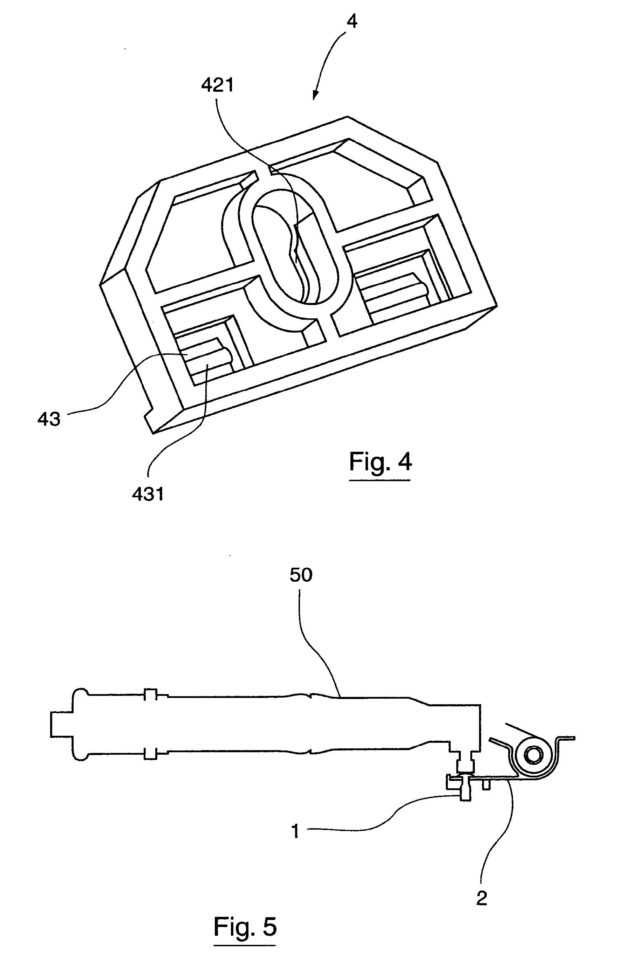

Ces moyens de pré-positionnement et de maintien sont constitués par une pièce illustrée par les figures 2 à 4 et désignée par la suite par entretoise 4 (tel que cela apparaît clairement sur la figure, les moyens de pré-positionnement et de maintien sont effectivement prévus selon le présent mode de réalisation pour former une entretoise 4 entre la tablette 2 et l'élément de structure fixe 3).

En référence à la figure 2, cette entretoise 4 comprend une lumière en forme de serrure, comprenant un orifice d'introduction 41 communiquant avec une deuxième portion 42 oblongue.

Parallèlement, les éléments de fixation prévus pour coopérer avec l'entretoise 4 selon le présent mode de réalisation sont constitués par des vis 1 comprenant :
- une tête de vis 11 ;
- une portion 12 de fixation, pourvue d'un filetage ;
- une portion 11, s'étendant entre la tête de vis et la portion 12, et présentant un diamètre inférieur à celui de la portion 12.

On note que le diamètre de la portion 12 correspond sensiblement au diamètre de l'orifice d'introduction 41 et que le diamètre de la portion 11 correspond sensiblement à la largeur de la deuxième portion 42 de la lumière.

De cette façon, la vis 1 est engagée dans l'orifice d'introduction 41 de l'entretoise 4 jusqu'à ce que la portion 11 de la vis 1 soit placée au niveau des rebords de la portion 42, l'entretoise étant ensuite déplacée par rapport à la vis 1 de façon que la portion 11 de la vis 1 soit engagée dans la portion 42.

On comprend donc qu'une fois introduite dans la portion 42 de l'entretoise, la vis 1 ne peut plus être retirée axialement de l'entretoise 4, le diamètre de la portion 12 de la vis ne permettant pas un tel déplacement.

Pour former un ensemble prêt à monter selon l'invention, on procède donc de la manière suivante :
- on place l'entretoise 4 de façon à faire coïncider son orifice d'introduction 41 avec le perçage de la tablette prévu pour le passage des vis ;
- on introduit la vis dans le perçage de la tablette puis dans l'orifice d'introduction 41 de la tablette ;
- on fait glisser l'entretoise 4 par rapport à la vis 1 et à la tablette 2, de façon que la portion 11 de la vis 1 soit engagée dans la portion 42 de l'entretoise 4.

On note par ailleurs que les différentes pièces sont dimensionnées pour que, lorsqu'elles sont assemblées sous forme d'un ensemble prêt à monter, ces pièces puissent être correctement calées entre elles, de façon à assurer un maintien satisfaisant pendant la durée de la livraison.

Ainsi, la longueur c de la portion 11 de la vis est sensiblement égale à la somme des épaisseurs a (épaisseur des rebords 421 de la portion 42) et b (épaisseur de la tablette au voisinage des perçages prévus pour le passage des vis 1).

Par ailleurs, l'entretoise 4 présente des moyens d'accrochage 43 destinés à coopérer avec la tablette 2.

Tel qu'illustré par les figures 2 à 4, les moyens d'accrochage 43 sont constitués par des pattes de clippage portant une portion semi-cylindrique 431 destinée à pénétrer une gorge 21 (figure 1) ménagée sous la tablette.

On note que cette gorge constitue en quelque sorte un moyen d'indexation et de repérage de la bonne mise en place de l'entretoise 4 sur la tablette 2. En effet, lors de sa mise en place par rapport à la vis 1 correspondante et à la tablette, l'entretoise 4 est déplacée pour engager la portion 11 de la vis dans la lumière 42, ceci jusqu'à ce que la portion 431 des pattes de clippage 43 pénètre la gorge 21 de la tablette, position dans laquelle le maintien de la vis sur la tablette est assuré.

On obtient ainsi un ensemble prêt à monter pouvant ensuite être facilement et rapidement solidarisé à un élément de structure fixe du véhicule.

La figure 5 illustre un autre avantage notable obtenu avec une tablette selon l'invention.

Préalablement, on rappelle que, traditionnellement, les tablettes arrière (en particulier les tablettes arrière fixes) sont solidarisées à l'intérieur du véhicule à l'aide de moyens de fixation vissés depuis l'intérieur du coffre à bagages. Un tel montage est donc fastidieux et inconfortable pour le monteur.

Tel que cela apparaît clairement sur la figure 5, le montage d'une tablette arrière selon l'invention sur un élément de structure du véhicule peut être obtenu en vissant les éléments de fixation 1, par exemple à l'aide d'un tournevis électrique 50, par la face supérieure de la tablette 2, ou en d'autres termes la face de la tablette 2 tournée vers l'intérieur du véhicule.

Cette phase de montage peut donc être obtenue dans des conditions plus confortables pour le monteur, lui permettant d'envisager des gestes plus précis.

Par ailleurs, un tel ensemble prêt à monter peut être pré-équipé d'un store d'occultation, ce qui contribue à faciliter le montage et à diminuer les temps correspondants.

## Revendications

1. Tablette arrière (2) de véhicule destinée à être solidarisée à un élément de structure (3) dudit véhicule à l'aide d'au moins un élément de fixation (1),
**caractérisée en ce qu'**elle comprend des moyens de pré-positionnement et de maintien (4) dudit ou desdits éléments de fixation (1), mis en place sur ladite tablette (2) avant le montage de cette dernière sur ledit élément de structure fixe(3), de telle sorte que ladite tablette (2) et lesdits éléments de fixation (1) forment un ensemble prêt à être monté.

2. Tablette arrière de véhicule selon la revendication 1, **caractérisé en ce que** lesdits moyens de pré-positionnement et de maintien (4) forment des moyens d'entretoisement entre ladite tablette (2) et ledit élément de structure fixe (3).

3. Tablette arrière de véhicule selon l'une des revendications 1 et 2, **caractérisée en ce que** lesdits moyens de pré-positionnement et de maintien (4) comprennent des moyens d'accrochage (43) destinés à coopérer avec ladite tablette (2).

4. Tablette arrière de véhicule selon la revendication 3, **caractérisée en ce que** lesdits moyens d'accrochage (43) sont constitués par des moyens de clippage.

5. Tablette arrière de véhicule selon la revendication 4, **caractérisée en ce que** lesdits moyens de clippage présentent au moins une excroissance destinée à pénétrer une cavité ménagée dans ladite tablette.

6. Tablette arrière de véhicule selon la revendication 5, **caractérisée en ce que** lesdits moyens de clippage portent au moins une portion semi-cylindrique (431) destinée à pénétrer une gorge (21) ménagée dans ladite tablette (2).

7. Tablette arrière de véhicule selon l'une quelconque des revendications 1 à 6, **caractérisée en ce que** lesdits moyens de pré-positionnement et de maintien (4) présentent au moins une lumière présentant deux portions, une première portion formant orifice d'introduction (41) desdits moyens de fixation (1) et une seconde portion (42), de dimension inférieure à ladite première portion et permettant le maintien desdits moyens de fixation (1) axialement par rapport à ladite tablette.

8. Tablette arrière de véhicule selon la revendication 7, **caractérisée en ce que** lesdits moyens de fixation (1) présentent une première portion (12) d'un diamètre correspondant sensiblement à celui dudit orifice d'introduction (41) et au moins une deuxième portion (11) d'un diamètre inférieur au diamètre de ladite première portion (12), et **en ce que** ladite seconde portion (42) de la lumière présente une largeur correspondant sensiblement au diamètre de ladite deuxième portion (11) desdits moyens de fixation.

9. Tablette arrière de véhicule selon la revendication 8, **caractérisée en ce que** lesdits moyens de fixation (1) comprennent au moins une pièce à visser comprenant une tête (10), et **en ce que** ladite deuxième portion (11) s'étend à partir de ladite tête (10).

10. Tablette arrière de véhicule selon l'une quelconque des revendications 8 et 9, **caractérisée en ce que** ladite deuxième portion (11) s'étend sur une longueur sensiblement égale à l'épaisseur d'au moins un bord de ladite lumière (42) ajoutée à l'épaisseur de ladite tablette (2) au voisinage du ou des perçages ménagés pour le passage desdits moyens de fixation (1).

11. Tablette arrière de véhicule selon l'une quelconque des revendications 1 à 10, **caractérisée en ce qu'**elle porte un store d'occultation.

12. Dispositif destiné à être couplé à une tablette arrière (2) de véhicule destinée à être montée sur un élément de structure fixe (3) dudit véhicule à l'aide d'au moins un élément de fixation (1),
**caractérisé en ce qu'**il comprend des moyens de pré-positionnement et de maintien (4) dudit ou desdits éléments de fixation (1), mis en place sur ladite tablette (2) avant le montage de cette dernière sur ledit élément de structure fixe (3), de telle sorte que ladite tablette (2) et lesdits éléments de fixation (1) forment un ensemble prêt à être monté.

13. Ensemble prêt à monter, **caractérisé en ce qu'**il comprend :
- une tablette arrière (2) de véhicule destinée à être solidarisée à un élément de structure fixe (3) dudit véhicule à l'aide d'au moins un élément de fixation (1) ;
- au moins un élément de fixation (1) ;
- des moyens de pré-positionnement et de maintien (4) dudit ou desdits éléments de fixation (1) sur ladite tablette (2).

14. Procédé de montage d'une tablette arrière de véhicule, **caractérisé en ce qu'**il comprend les étapes de :
- mise en place sur ladite tablette (2), dudit ou desdits éléments de fixation (1) à l'aide desdits moyens de pré-positionnement et de maintien (4), de telle sorte que ladite tablette (2) et lesdits éléments de fixation (1) forment un ensemble prêt à être monté ;
- fixation de ladite tablette (2) audit élément de structure fixe (3) à l'aide dudit ou desdits éléments de fixation (1).

15. Véhicule équipé d'une tablette arrière (2) solidarisé à un élément de structure fixe à l'aide d'au moins un élément de fixation (1), **caractérisé en ce que** des moyens d'entretoisement sont prévus entre ladite tablette et ledit élément de structure fixe (3), lesdits moyens d'entretoisement formant des moyens de pré-positionnement et de maintien (4) dudit ou desdits éléments de fixation (1) mis en place sur ladite tablette (2) avant le montage de cette dernière sur ledit élément de structure fixe (3).
